# EUROPEAN PATENT APPLICATION

(11) **EP 4 661 383 A1**
(43) Date of publication of application: **10.12.2025**
(21) Application number: 24777635.4
(22) Date of filing: 04.03.2024
(51) Int. Cl.: H04M 15/00

(54) **INFORMATION TRANSMISSION METHOD AND APPARATUS, AND SYSTEM**

(30) Priority: 28.03.2023 CN 202310371730
(71) Applicant: Huawei Technologies Co., Ltd., Shenzhen, Guangdong 518129 (CN)
(72) Inventor: LI, Mu, Shenzhen, Guangdong 518129 (CN)
(74) Representative: Pfenning, Meinig & Partner mbB
(86) International application number: PCT/CN2024/079905
(87) International publication number: WO 2024/198845

(57) **Abstract**

This application relates to the field of communication technologies, and discloses an information transfer method, apparatus, and system. The method includes: An IMS application server receives an SIP message from an IMS communication control network element, where the SIP message is used to manage a communication session between a first communication device and a second communication device, and the SIP message includes a charging identifier of the communication session; and the IMS application server sends the charging identifier to a data channel control network element, where the charging identifier is used to associate charging information of a data channel application with charging information of the communication session. In this way, because the IMS application server sends the charging identifier of the communication session to the data channel control network element, the data channel control network element may subsequently send the charging identifier of the communication session to a charging processing device by using a charging trigger function unit associated with the data channel control network element. This helps the charging processing device perform associated charging on the charging information of the communication session and the charging information of the data channel application.

## Description

### CROSS-REFERENCE TO RELATED APPLICATIONS

This application claims priority to Chinese Patent Application No. 202310371730.1, filed with the China National Intellectual Property Administration on March 28, 2023 and entitled "INFORMATION TRANSFER METHOD, APPARATUS, AND SYSTEM", which is incorporated herein by reference in its entirety.

### TECHNICAL FIELD

This application relates to the field of communication technologies, and in particular, to an information transfer method, apparatus, and system.

### BACKGROUND

Currently, the 3rd generation partnership project (3rd generation partnership project, 3GPP) defines an IMS data channel (data channel, DC) based on an internet protocol (internet protocol, IP) multimedia subsystem (IP multimedia subsystem, IMS) audio and video communication architecture, to be specific, one or more data channels parallel to an audio channel and a video channel are established in an IMS communication session, to transmit data of DC applications (which may be data of any type, such as a text or a picture), so that real-time interaction, screen sharing, superimposed augmented reality (augmented reality, AR), and even synchronous full immersive experience of auditory, visual, and tactile senses can be implemented in an IMS communication session process (for example, an audio/video call process).

However, the IMS communication session and the data channel are managed by different entities, and how to implement charging correlation still needs to be further studied.

### SUMMARY

This application provides an information transfer method, apparatus, and system, to transfer a charging identifier of a communication session to a data channel control network element, so as to perform associated charging on the communication session and a data channel application associated with the communication session.

**According to a first aspect,** an embodiment of this application provides an information transfer method. The method may be applied to an IMS application server or a component (for example, a circuit or a chip) in the IMS application server. For example, the method is applied to the IMS application server. In the method, an internet protocol multimedia subsystem IMS application server receives a session initiation protocol SIP message from an IMS communication control network element, where the SIP message is used to manage a communication session between a first communication device and a second communication device, and the SIP message includes a charging identifier of the communication session; and the IMS application server sends the charging identifier to a data channel control network element, where the charging identifier is used to associate first charging information with second charging information, where the first charging information is charging information of a data channel application, and is provided by a first charging trigger function unit associated with the data channel control network element; the second charging information is charging information of the communication session, and is provided by a second charging trigger function unit associated with the IMS communication control network element and/or the IMS application server; and the data channel application is an application that is managed by the data channel control network element and that provides a service through a data channel that is associated with the communication session.

In this way, because the IMS application server sends the charging identifier of the communication session to the DC control network element, the DC control network element may subsequently send the charging identifier of the communication session to a charging processing device by using the charging trigger function unit associated with the DC control network element. This helps the charging processing device perform associated charging on the communication session and the DC application associated with the communication session.

In a possible design, the method further includes: The IMS application server sends one or more of the following to the data channel control network element: an operator identifier corresponding to the first communication device or the second communication device, address information of a charging processing device, and an identifier of the data channel application.

In a possible design, that the IMS application server sends the charging identifier to the data channel control network element includes: The IMS application server sends a first session event report message to the data channel control network element, where the first session event report message includes the charging identifier.

In a possible design, the charging identifier is an IMS charging identifier.

In a possible design, the SIP message is one or more of the following: an SIP invite request message, an SIP invite response message, an SIP re-invite request message, an SIP re-invite response message, an SIP update request message, an SIP update response message, an SIP bye message, an SIP notify message, an SIP register message, an SIP subscribe message, an SIP publish message, and an SIP cancel message.

In a possible design, the method further includes: The IMS application server determines that the communication session is associated with the data channel.

According to the foregoing method, the IMS application server may send the charging identifier of the communication session to the DC control network element when a specific condition is met, to avoid invalid information transmission.

In a possible design, the SIP message includes indication information, and the indication information indicates that the communication session is associated with the data channel.

In a possible design, the indication information includes session description protocol SDP information of the data channel.

In a possible design, the IMS communication control network element is a serving-call session control function network element.

**According to a second aspect,** an embodiment of this application provides an information transfer method. The method may be applied to a data channel control network element or a component (for example, a circuit or a chip) in the data channel control network element. For example, the method is applied to the data channel control network element. In the method, the data channel control network element receives a charging identifier of a communication session between a first communication device and a second communication device from an IMS application server; and the data channel control network element sends charging request information including the charging identifier to a charging processing device by using a first charging trigger function unit associated with the data channel control network element, where the charging identifier is used to associate first charging information with second charging information, where the first charging information is charging information of a data channel application, and is provided by the first charging trigger function unit; the second charging information is charging information of the communication session, and is provided by a second charging trigger function unit associated with the IMS communication control network element and/or the IMS application server; and the data channel application is an application that is managed by the data channel control network element and that provides a service through a data channel that is associated with the communication session.

In a possible design, the method further includes: The data channel control network element receives one or more of the following from the IMS application server: an operator identifier corresponding to the first communication device or the second communication device, address information of the charging processing device, and an identifier of the data channel application.

In a possible design, the charging request information further includes the operator identifier corresponding to the first communication device or the second communication device, and/or the identifier of the data channel application. The charging request information in this embodiment of this application may be replaced with a charging request message.

In a possible design, that the data channel control network element receives the charging identifier sent by the IMS application server includes: The data channel control network element receives a first session event report message from the IMS application server, where the first session event report message is used to report an event of the communication session, and the first session event report message includes the charging identifier.

In a possible design, the method further includes: The data channel control network element receives a second session event report message from the IMS application server, where the second session event report message is used to report an application data channel establishment request event of the data channel application; or the data channel control network element receives a third session event report message from the IMS application server, where the third session event report message is used to report an application data channel teardown request event of the data channel application; or the data channel control network element receives a charging request from the first communication device or the second communication device; or the data channel control network element receives a fourth session event report message from the IMS application server, where the fourth session event report message is used to report that the first communication device or the second communication device triggers a supplementary service.

In a possible design, the charging identifier is an IMS charging identifier.

**According to a third aspect,** an embodiment of this application provides an information transfer method. In the method, an IMS communication control network element sends an SIP message to an IMS application server, where the SIP message is used to manage a communication session between a first communication device and a second communication device, and the SIP message includes a charging identifier of the communication session; the IMS application server receives the SIP message, and sends the charging identifier to a data channel control network element; and the data channel control network element receives the charging identifier, and sends the charging identifier to a charging processing device by using a first charging trigger function unit associated with the data channel control network element, where the charging identifier is used to associate first charging information with second charging information, where the first charging information is charging information of a data channel application, and is provided by the first charging trigger function unit; the second charging information is charging information of the communication session, and is provided by a second charging trigger function unit associated with the IMS communication control network element and/or the IMS application server; and the data channel application is an application that is managed by the data channel control network element and that provides a service through a data channel that is associated with the communication session.

In a possible design, the method further includes: The IMS application server sends one or more of the following to the data channel control network element: an operator identifier corresponding to the first communication device or the second communication device, address information of the charging processing device, and an identifier of the data channel application.

In a possible design, the charging request information further includes the operator identifier corresponding to the first communication device or the second communication device, and/or the identifier of the data channel application.

**According to a fourth aspect,** this application provides a communication apparatus. The communication apparatus has a function of implementing the first aspect or the second aspect. For example, the communication apparatus includes a corresponding module, unit, or means (means) for performing an operation in the first aspect or the second aspect, and the modules, units, or means may be implemented by software, or may be implemented by hardware, or may be implemented by hardware executing corresponding software.

In a possible design, the communication apparatus includes a processing unit and a communication unit. The communication unit may be configured to receive and send signals, to implement communication between the communication apparatus and another apparatus. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be configured to be coupled to a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and an interface circuit. The processor is configured to: communicate with another apparatus through the interface circuit, and perform the method in any possible design or implementation of the first aspect or the second aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a fifth aspect,** this application provides a communication system. The communication system may include an IMS application server and a DC control network element. The IMS application server is configured to perform the method provided in the first aspect, and the DC control network element is configured to perform the method provided in the second aspect.

**According to a sixth aspect,** this application provides a computer-readable storage medium, where the computer storage medium stores computer-readable instructions, and when a computer reads and executes the computer-readable instructions, the computer is enabled to perform the method in any possible design of the first aspect to the third aspect.

**According to a seventh aspect,** this application provides a computer program product. When a computer reads and executes the computer program product, the computer is enabled to perform the method in any possible design of the first aspect to the third aspect.

**According to an eighth aspect,** this application provides a chip, where the chip includes a processor, and the processor is coupled to a memory, and is configured to read and execute a software program stored in the memory, to implement the method in any possible design of the first aspect to the third aspect.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of a data channel protocol stack according to an embodiment of this application;
FIG. 4 is a flowchart of obtaining a data channel application according to an embodiment of this application;
FIG. 5A and FIG. 5B are a diagram of a call procedure according to an embodiment of this application;
FIG. 6 is a diagram of a charging network architecture according to an embodiment of this application;
FIG. 7A is a diagram of a network architecture to which an embodiment of this application is applicable;
FIG. 7B is a diagram of another network architecture to which an embodiment of this application is applicable;
FIG. 8 is a schematic flowchart corresponding to an information transfer method according to an embodiment of this application;
FIG. 9 is a possible block diagram of an example of an apparatus according to an embodiment of this application; and
FIG. 10 is a possible diagram of a structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

In the specification, claims, and accompanying drawings of embodiments of this application, terms "first", "second", "third", "fourth", various other terms and symbols, and the like (if exist) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) communication system (which is also referred to as a new radio (new radio, NR) system), a 4th generation (4th generation, 4G) communication system (which is also referred to as a long term evolution (long term evolution, LTE) system), an LTE frequency division duplex (frequency division duplex, FDD) system, and an LTE time division duplex (time division duplex, TDD) system. The technical solutions provided in this application can also be applied to future communication systems, for example, a 6th generation (6th generation, 6G) mobile communication system.

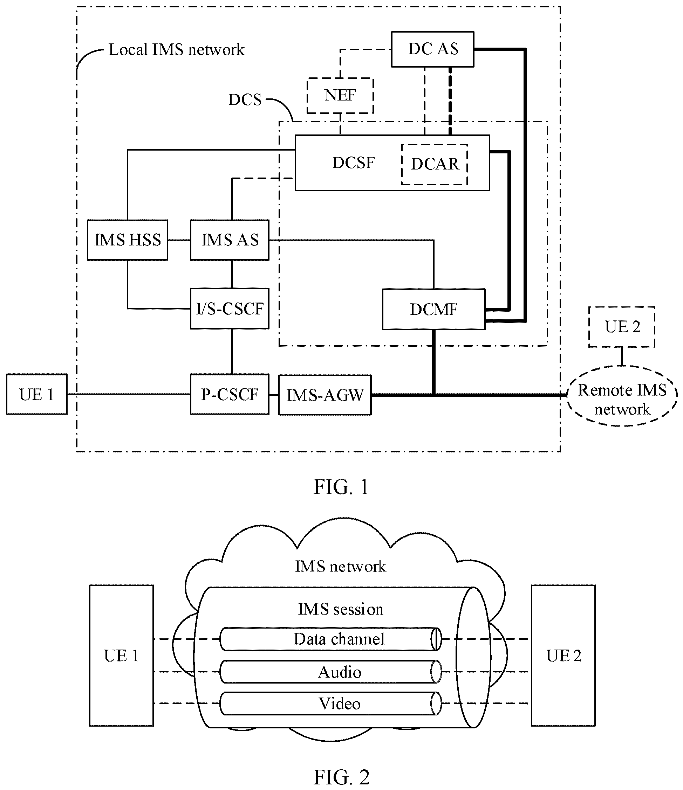

With reference to FIG. 1, the following uses an example to describe a communication system 100 according to an embodiment of this application. It should be understood that the communication system described in this application is merely an example, and should not constitute any limitation on this application. Network elements (or referred to as functional network elements, functional entities, nodes, devices, and the like) shown in FIG. 1 are briefly described herein.
1. Terminal device: The terminal device may be any device that can access a network, and may also be referred to as user equipment (user equipment, UE), a terminal apparatus, an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a voice/data connectivity for a user, for example, a handheld device or a vehicle-mounted device that has a wireless connection function. Currently, some examples of the terminal may be: a mobile phone (mobile phone), a tablet computer (pad), a computer having a wireless sending/receiving function (for example, a notebook computer or a palmtop computer), a mobile internet device (mobile internet device, MID), a virtual reality (virtual reality, VR) device, an AR device, a wireless terminal in industrial control (industrial control), a wireless terminal in self driving (self driving), a wireless terminal in remote (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or computing device having a wireless communication function, another processing device connected to a wireless modem, a vehicle-mounted device, a wearable device, a terminal device in a 4G/5G network, a terminal device in a future evolved public land mobile communication network (public land mobile network, PLMN), and the like.

In addition, the UE may alternatively be UE in an internet of things (Internet of things, IoT) system. IoT is an important component of future information technology development. A main technical feature of the IoT is to connect things to a network by using a communication technology, to implement a smart network for human-machine interconnection and thing-thing interconnection. The IoT technology can achieve massive connections, deep coverage, and terminal power saving by using, for example, a narrow band (narrow band, NB) technology.

The UE may further include an intelligent printer, a train detector, and the like. Main functions of the UE include collecting data (some terminal devices), receiving control information and downlink data of a network device, sending an electromagnetic wave, and transmitting uplink data to the network device.

Optionally, the UE may serve as a base station. For example, the user equipment may serve as a scheduling entity that provides a sidelink signal between user equipment in vehicle-to-everything (vehicle-to-everything, V2X), device-to-device (device-to-device, D2D), or the like. For example, a cellular phone and a car communicate with each other by using a sidelink signal. The cellular phone communicates with a smart household device without relaying a communication signal through a base station.

In network architectures provided in embodiments of this application, different UE may perform an IMS call through IMS networks. For example, UE 1 and UE 2 in FIG. 1 may perform an IMS call through IMS networks. The UE 2 may be referred to as a peer device that performs the IMS call with the UE 1. Similarly, the UE 1 may be referred to as a peer device that performs the IMS call with the UE 2. It is assumed that the UE 1 is a device that initiates the call. For the UE 1, the IMS network serving the UE 1 may be referred to as a local IMS (Local IMS) network, and the IMS network serving the UE 2 may be referred to as a remote IMS (Remote IMS) network. It may be understood that a network element architecture inside the remote IMS network is similar to a network element architecture inside the local IMS network. For brevity, the network element architecture inside the remote IMS network is not shown in the figure.

2. Call session control function (call session control function, CSCF) network element: A CSCF is a functional entity inside an IMS, and is a core of the entire IMS. The CSCF is mainly responsible for processing signaling control in a multimedia call session process. The CSCF manages user authentication of the IMS and quality of service (quality of service, QoS) on an IMS bearer-plane, cooperates with another network element to perform control on a session initiation protocol (session initiation protocol, SIP) session, service negotiation, resource allocation, and the like. For ease of description, the CSCF network element in this application is referred to as the "CSCF".

The CSCF may communicate with the terminal device, and the CSCF may communicate with a gateway device. For example, the CSCF may select the gateway device that communicates with the terminal device. In addition, the CSCF may allocate routing information, for example, an IP address or a port, to the terminal device and the gateway device.

By way of example but not limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions.

The P-CSCF is an entry node for a user to access the IMS network, and is mainly responsible for forwarding SIP signaling between the IMS user and a home network. The I-CSCF is a unified entry point for the IMS user to the home network, and is responsible for allocating or querying the S-CSCF that serves the user. The S-CSCF is a unified entry point for the IMS user to the home network, and is responsible for allocating or querying the S-CSCF that serves the user.

It may be understood that the P-CSCF, the S-CSCF, and the I-CSCF may be independently disposed in different entities, or may be integrated into a same entity. This is not limited in this application.

The IMS communication control network element in the following embodiments of this application may be a CSCF, and further, for example, may be an S-CSCF.

3. IMS access media gateway (access media gateway, AGW): The IMS AGW may provide functions of an IMS network access gateway and media gateway.

4. Data channel server (data channel server, DCS): The DCS can be classified into two logical functional entities: a data channel signaling function (data channel signaling function, DCSF) network element and a data channel media function (data channel media function, DCMF) network element. The DCMF network element is configured to provide a data channel media resource management function, and the DCSF network element is configured to provide a data channel signaling control function.

It may be understood that in actual network deployment, the DCSF network element and the DCMF network element may be integrated (referred to as the DCS in this case), or may be separated. This is not limited in this application.

A data channel control network element (namely, a DC control network element) in the following embodiments of this application may be a DCS, and further, for example, may be a DCSF network element.

5. Data data channel application repository (data channel application repository, DCAR): The DCAR is a repository used to store a data channel application (data channel application, DC App).

After a developer completes development of a DC App, the developer uploads the DC App to a DCS of an operator, and the DCS then stores the DC App in the DCAR. The DCS downloads the DC App from the DCAR to a local when necessary, for subsequent processing.

6. Home subscriber server (home subscriber server, HSS): The HSS serves as a database for storing user information in the IMS, and the user stores user data. By way of example, and not limitation, the user data may include information that is about a data channel service and that is subscribed to by the user and the operator to use.

7. IMS application server (application server, AS): The IMS AS is an application layer device at a top layer of the IMS system, and provides basic services and supplementary services, for example, a multimedia conference, convergent communication, a short message service gateway, and a standard attendant console. The IMS network is an IP bearer-based open system that provides various multimedia services for the user. The IMS AS interacts with the CSCF to trigger and execute various network services. In addition, the terminal device is communicatively connected to the IMS AS. The IMS AS may establish a data channel for the terminal device. For example, the IMS AS may be a multimedia telephony application server (multimedia telephony application server, MMTEL AS) or a telephony application server (telephony application server, TAS).

8. Data channel application server (data channel application server, DC AS): The DC AS provides data channel service logic. It may be understood that the DC AS may be deployed in an IMS network. In this case, the DC AS may be directly connected to another network element in the IMS network through an interface (for example, a service-oriented interface). Alternatively, the DC AS may be deployed outside the IMS network. In this case, the DC AS may be connected to another network element in the IMS network through a network exposure function (network exposure function, NEF) network element (or an IMS border network management system).

9. NEF network element: The NEF network element is configured to securely expose various services of a 5GC network to a third party.

The foregoing network architecture applied to embodiments of this application is merely an example, and a network architecture applicable to embodiments of this application is not limited thereto. Any network architecture that can implement functions of the foregoing network elements is applicable to embodiments of this application. In other words, the network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

It may be further understood that the network elements or the devices listed in the foregoing network architecture are merely examples for description, and the network architecture applicable to this application may further include another network element or device. This is not limited in this application.

It may be further understood that the names of the foregoing network elements or devices are defined merely for distinguishing between different functions, and should not constitute any limitation on this application. This application does not exclude a possibility that another name is used in the 4G network, the 5G network, and another future network. For example, in a 6G network, some or all of the foregoing network elements may use a term in 4G/5G, or may use another name.

Based on the network architecture shown in FIG. 1, to facilitate understanding of the technical solutions in embodiments of this application, some terms or concepts that may be used in embodiments of this application are described herein.

### 1. Communication session

The communication session in embodiments of this application is an IMS communication session, and may also be referred to as an IMS session, a session, or the like. The communication session is communication that is performed between a terminal device and one or more other terminal devices through a network element in the IMS and that participates in the communication as a calling party (or an initiator) or a called party (or an initiated party).

The IMS communication session may cover an entire process from starting dialing to ending a call, or may cover a part of a process from starting dialing to ending the call, for example, a process from entering a call state by all parties participating in the IMS communication session to ending the call.

The IMS communication session may be in a one-to-one form, or may be in a one-to-many (for example, a conference) form. In embodiments of this application, the one-to-one form is used as an example, but all related solutions may be used in the one-to-many form.

In embodiments of this application, "the UE 1 and the UE 2 are in a same IMS communication session" means that both the UE 1 and the UE 2 are participants in a same IMS communication session, or the communication session is a communication session between the UE 1 and the UE 2. The UE 1 is calling party user equipment, and the UE 2 is called party user equipment; or the UE 1 is called party user equipment, and the UE 2 is calling party user equipment.

### 2. Data channel

The data channel in embodiments of this application is also referred to as an IMS data channel (IMS data channel), namely, a data channel in the IMS, and may be used to transmit data according to a stream control transmission protocol (stream control transmission protocol, SCTP). That is, the data channel is a logical channel or a data connection for transmitting data according to the SCTP.

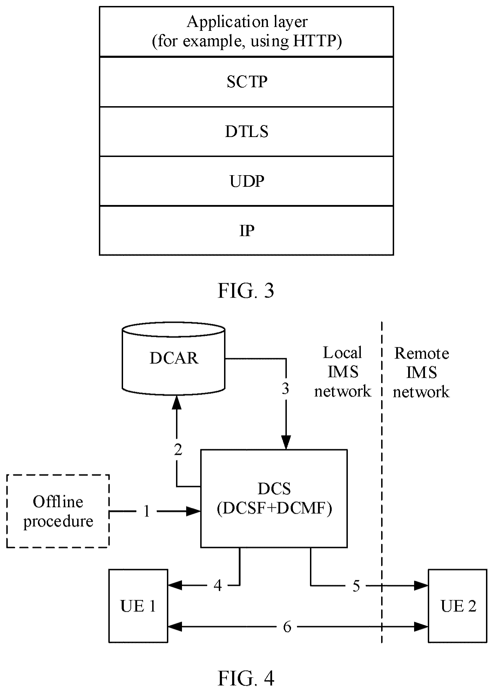

For example, the DC may provide richer real-time interaction services for the user in addition to an audio/video call and a text. For example, terminal devices (for example, the UE 1 and UE 2 in FIG. 2) in a same IMS communication session determine, by using an SIP/session description protocol (session description protocol, SDP) media negotiation procedure of the IMS, IP addresses and ports used by the two terminal devices to transmit data, key information required for establishing a datagram transport layer security (datagram transport layer security, DTLS) association and an SCTP association, and media information corresponding to the data channel, to establish, in the IMS session, one or more data channels (a data channel shown in FIG. 2 or FIG. 3, where FIG. 3 shows an SCTP/DTLS/user datagram protocol (user datagram protocol, UDP)/IP based data channel protocol stack) that are transmitted in parallel with audio channels and video channels. The data channel is associated with the IMS communication session. It may be understood that FIG. 2 is illustrated by using an example in which the IMS session includes the audio channel, the video channel, and the data channel. In another possible example, the IMS session may alternatively include only the data channel, and does not include another channel (for example, the audio channel or the video channel).

Further, the UE 1 and the UE 2 may download various applications (namely, a DC App) from a network side DCS through a data channel, run these applications before an audio/video call, during the audio/video call, or after the audio/video call, and transmit various types of application data of these applications through the data channel. Therefore, communication other than a voice call or a video call can be performed between the UE 1 and the UE 2, for example, screen sharing (screen sharing), simultaneous translation (simultaneous translation), location sharing, AR special effect superimposition, and even synchronous immersive interaction such as auditory, visual, and tactile interaction, to improve user experience.

The data channels may be classified into two types based on different uses: a bootstrap data channel (bootstrap data channel, BDC) and an application data channel (application data channel, ADC).

The BDC is used by the terminal device to obtain the DC App from the DCS. When the data channel is the BDC, an application layer in a protocol stack shown in FIG. 3 may transmit data through HTTP.

A terminal device supporting a data channel capability may establish a BDC with a DCS in a call originating network and/or a DCS in a call terminating network. A specific manner depends on whether the networks support the data channel capability and service subscription statuses of the communication terminal devices in the networks.

In addition, the BDC can be only for transferring data using a hypertext transfer protocol (hypertext transfer protocol, HTTP), and a value of a stream ID of the BDC is less than 1000.

The ADC is used to transmit interaction data generated by the DC Apps running on the two communication parties. In a P2P scenario, the ADC is established between the calling and called terminal devices. In this case, the ADC is used to transmit interaction data generated by the DC Apps running on the communication terminal devices.

In addition, when the data channel is the ADC, the application layer in the protocol stack shown in FIG. 3 may transmit data using a plurality of possible protocols. This is not specifically limited. A value of a stream ID of the ADC is greater than or equal to 1000.

### 3. Data channel application

The data channel application in embodiments of this application is an application that provides a service through a data channel, and the data channel application is used to transmit additional communication information through a data channel between a plurality of terminal devices in a same IMS communication session. For example, the additional communication information may include at least one of the following: content shot by a camera of user equipment, information generated by giving a like, information generated by sending a red packet, desktop sharing content, a mark drawn by a user on a screen, a text message entered by the user, picture information entered by the user, geographical location information, video content in a video file, or the like.

In an example, the data channel application is network (Web) content including a hypertext markup language (hypertext markup language, HTML), a JavaScript script and a picture, and cascading style sheets (cascading style sheets, CSS), describes a graphical user interface (user interface, UI), and can implement interactive service logic.

The data channel application is usually downloaded from a network side by a call application on the terminal device, runs during an IMS call, and does not need to be installed or uninstalled. It may be understood that the data channel application may exist in a form of a web page, or may exist in a form of an applet, a quick app, a light app, or the like. This is not limited in this application.

For example, the data channel application in embodiments of this application may be a DC App in a 4G/5G network. The DC App can transfer various data such as texts, images, locations, and files before and after an IMS call is established, to implement communication between two communication parties in addition to a voice call or a video call, thereby greatly improving experience of the two communication parties.

The terminal device may obtain the DC App from a DCS through a BDC in an HTTP procedure, may automatically or interactively update the DC App at any time, and then performs communication in the voice call or the video call with a peer terminal device by using the DC App. For example, the UE 1 and the UE 2 are in a same IMS communication session. It is assumed that in a call process between UE 1 and UE 2, the UE 1 expects to share a mobile phone screen of the UE 1 with the UE 2 to indicate B to perform mobile phone setting. In this case, the UE 1 and UE 2 may first separately obtain a DC App used for screen sharing, then, separately run the DC App to perform communication other than a voice call or a video call with the peer UE. With reference to a flowchart shown in FIG. 4, the following briefly describes a procedure in which a terminal device obtains a DC App. In an example provided in FIG. 4, an example in which UE 1 and UE 2 are respectively calling user equipment and called user equipment is used for description.
① A developer develops the DC App through an offline procedure and uploads the developed DC App to an operator's DCS.
② The DCS saves the DC App to a DCAR.
③ The DCS downloads the DC App from the DCAR when necessary.
④ The UE 1 establishes a BDC with the DCS, and obtains a required DC App from the DCS through the BDC.
⑤ The UE 2 establishes a BDC with the DCS, and obtains a required DC App from the DCS through the BDC.
(6) The UE 1 and the UE 2 establish an ADC, to transmit interaction data of the DC App.

### 4. Session event report message

In this embodiment of this application, the IMS AS may send a session event report message to the DC control network element. The session event report message is a non-SIP message, for example, may be an HTTP message. The session event report message may be used to report an event of a communication session. For example, the event of the communication session may include one or more of the following:
a session establishment request event (SessionEstablishmentRequestEvent) indicating that the IMS AS receives an SIP invite request message,
a session establishment progress event (SessionEstablishmentProgressEvent) indicating that the IMS AS receives an SIP invite response message,
a session establishment success event (SessionEstablishmentSuccessEvent) indicating that a communication session is successfully established,
a session establishment failure event (SessionEstablishmentFailureEvent) indicating that a communication session fails to be established,
a media change request event (MediaChangeRequestEvent) indicating that the IMS AS receives a request for changing a media resource, where further, the media change request event may include an ADC establishment request event and an ADC teardown request event, the ADC establishment request event indicates that the IMS AS receives an ADC establishment request, and the ADC teardown request event indicates that the IMS AS receives an ADC teardown request,
a media change success event (MediaChangeSuccessEvent) indicating that a media resource change request succeeds,
a media change failure event (MediaChangeFailureEvent) indicating that a media resource change request fails, and
a session termination event (SessionTerminationEvent) indicating that a session is terminated.

It may be understood that the event of the communication session may alternatively be another possible event. This is not limited in embodiments of this application.

The foregoing describes related terms. The following describes a possible call procedure based on the network architecture shown in FIG. 1, to describe a communication session between two communication parties (for example, the UE 1 and the UE 2).

In the network architecture shown in FIG. 1, the UE 1 and the UE 2 may belong to a same IMS network, that is, a local IMS network and a remote IMS network are a same IMS network. Alternatively, the UE 1 and the UE 2 may belong to different IMS networks, that is, the local IMS network and the remote IMS network are different IMS networks. For example, the UE 1 belongs to a first IMS network, and the UE 2 belongs to a second IMS network. The network elements described above, such as the IMS communication control network element, the IMS AS, and the DC control network element, may be deployed in both the first IMS network and the second IMS network. For example, the first IMS network includes a first IMS communication control network element, a first IMS AS, and a first DC control network element, and the second IMS network includes a second IMS communication control network element, a second IMS AS, and a second DC control network element. The first IMS network and the second IMS network cooperate with each other to provide a call service for the UE 1 and the UE 2. Optionally, the first IMS network and the second IMS network respectively correspond to different operators (for example, deployed or maintained by different operators).

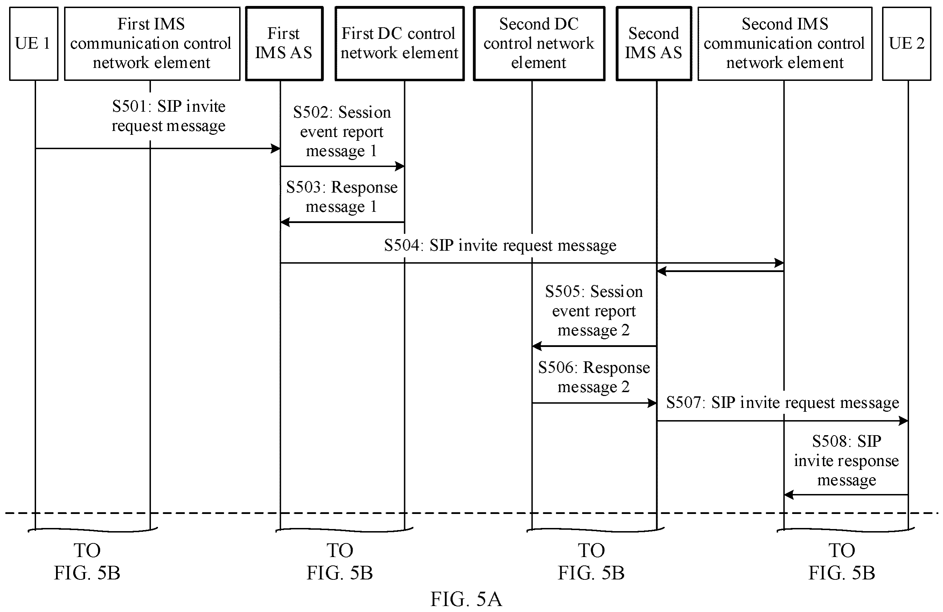

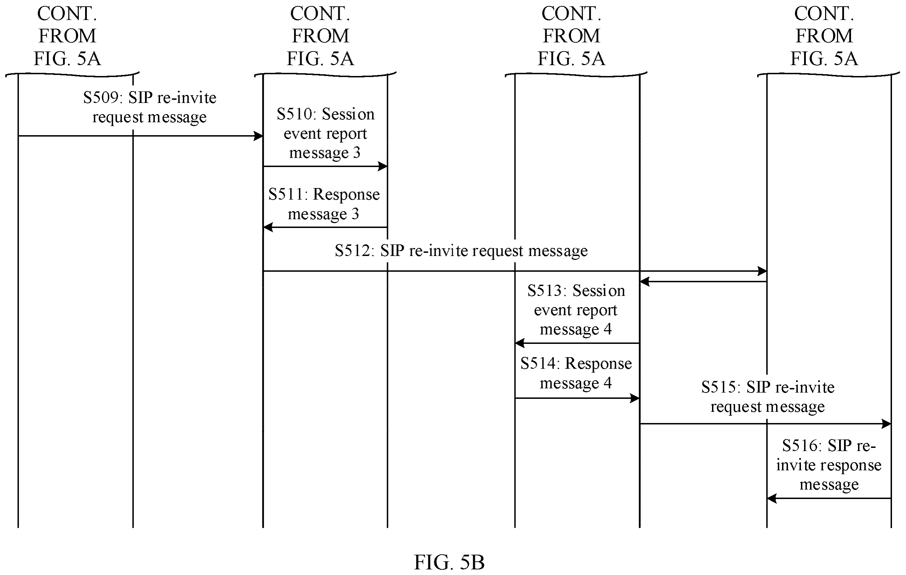

The following describes a possible call procedure with reference to **FIG. 5A** **and** **FIG.** 5B by using the UE 1 as a calling terminal device and the UE 2 as a called terminal device. As shown in FIG. 5A and FIG. 5B, the procedure may include the following steps.

S501: After detecting that a user triggers an IMS communication session, the UE 1 sends an SIP invite request message to a first IMS AS by using a first IMS communication control network element.

For example, an SIP header of the SIP invite request message may include a user identifier of the UE 1 and a user identifier of the UE 2. An SIP body (namely, SDP information) of the SIP invite request message may include media negotiation information of the UE 1, and may further include other possible information, such as an SDP version number and a session name. A call associated with a DC is used as an example, that is, the call is a DC call. Table 1 shows an example of a format of the SIP invite request message.

**Table 1: Example of the format of the SIP invite request message**

| |
|---|
| ... |
| From: X X X; |
| To: X X X; |
| ... |
| v=X X X; |
| s=X X X; |
| m=audio port number 1a/quantity of ports transmission protocol media format description; |
| c=network type address type connection address (for example, IN ip4 192.168.1.1); |
| a=X X X; |
| m=video port number 1b/quantity of ports transmission protocol media format |
| description; |
| c=network type address type connection address; |
| a=X X X; |
| m=application port number 1c/quantity of ports transmission protocol media format description; |
| c=network type address type connection address; |
| a=X X X; |
| ... |

In Table 1, "From: X X X" indicates that "a From field carries a user identifier of a calling party (the UE 1)", "To: X X X" indicates that "a To field carries a user identifier of a called party (the UE 2)", "v=X X X" indicates an SDP version number, and "s=X X X" indicates a session name.

"m=audio port number 1a/quantity of ports transmission protocol media format description; c=network type address type connection address; a=X X X" indicates media negotiation information of the UE 1 for an audio channel, where "port number 1a/quantity of ports" indicates a port number of an audio channel on a UE 1 side (for example, if a port number 1a/a quantity of ports is 3567/2, it indicates that port numbers of audio channels on the UE 1 side are 3567 and 3568). For other parameters, refer to explanations in an existing protocol.

"m=video port number 1b/quantity of ports transmission protocol media format description; c=network type address type connection address; a=X X X" indicates media negotiation information of the UE 1 for a video channel.

"m=application port number 1c/quantity of ports transmission protocol media format description; c=network type address type connection address; a=X X X" indicates media negotiation information of the UE 1 for a data channel (specifically, a steering data channel).

It may be understood that the parameters shown in Table 1 are merely examples, and the SIP header and the SIP body of the SIP message may further include other possible parameters. This is not specifically limited.

S502: The first IMS AS sends a session event report message 1 to a first DC control network element.

Herein, the first IMS AS may send the session event report message 1 to the first DC control network element through a service-oriented interface.

For example, a session event reported by using the session event report message 1 may be a session establishment request event.

S503: After receiving the session event report message 1, the first DC control network element may return a session event report response message 1 to the first IMS AS.

S504: The first IMS AS forwards an SIP invite request message to a second IMS AS by using a second IMS communication control network element.

S505: After receiving the SIP invite request message, the second IMS AS sends a session event report message 2 to a second DC control network element.

Herein, the second IMS AS may send the session event report message 2 to the second DC control network element through a service-oriented interface.

For example, a session event reported by using the session event report message 2 may be a session establishment request event.

S506: After receiving the session event report message 2, the second DC control network element may return a session event report response message 2 to the second IMS AS.

S507: The second IMS AS forwards an SIP invite request message to the UE 2 by using the second IMS communication control network element.

S508: After a user of the UE 2 answers a call, the UE 2 may send an SIP invite response message to the second IMS communication control network element.

For example, an SIP header of the SIP invite response message may include a user identifier of the UE 1 and a user identifier of the UE 2; and an SIP body (namely, SDP information) of the SIP invite response message may include a media parameter accepted by the UE 2 (or media negotiation information of the UE 2). Table 2 is an example of a format of the SIP invite response message.

**Table 2: Example of the format of the SIP invite response message**

| |
|---|
| ... |
| From: X X X; |
| To: X X X; |
| ... |
| v=X X X; |
| s=X X X; |
| m=audio port number 2a/quantity of ports transmission protocol media format description; |
| c=network type address type connection address; |
| a=X X X; |
| m=video port number 2b/quantity of ports transmission protocol media format description; |
| c=network type address type connection address; |
| a=X X X; |
| m=application port number 2c/quantity of ports transmission protocol media format description; |
| c=network type address type connection address; |
| a=X X X; |
| ... |

For explanations of related parameters in Table 2, refer to Table 1. For example, "m=application port number 2c/quantity of ports transmission protocol media format description; c=network type address type connection address; a=X X X" indicates media negotiation information of the UE 2 for a data channel (specifically, a steering data channel).

Subsequently, the SIP invite response message may be returned to the UE 1 through interaction between a network element in a first IMS network and a network element in a second IMS network, to establish an IMS communication session between the UE 1 and the UE 2. The IMS communication session includes an audio channel, a video channel, and DC guided communication. For a specific establishment process, refer to a protocol. This is merely a simple example herein.

Further, if the UE 1 detects an operation of triggering a DC application by the user in a call process, the UE 1 may initiate a media change procedure, and establish an application data channel between the UE 1 and the UE 2 by using the media change procedure. In this case, the foregoing procedure may further include the following.

S509: After detecting the operation of triggering the DC application by the user in the call process, the UE 1 sends an SIP re-invite request message to the first IMS AS by using the first IMS communication control network element.

For example, the SIP re-invite request message may include a user identifier of the UE 1, a user identifier of the UE 2, and SDP information of the UE 1. The SDP information of the UE 1 may include media negotiation information of the UE 1. Compared with the SIP re-invite request message, the media negotiation information carried in the SIP re-invite request message may further include an identifier (DC APP ID) of the DC application triggered by the user. Table 3 shows an example of a format of the SIP re-invite request message.

**Table 3: Example of the format of the SIP re-invite request message**

| |
|---|
| ... |
| From: X X X; |
| To: X X X; |
| ... |
| v=X X X; |
| s=X X X; |
| m=audio port number 1a/quantity of ports transmission protocol media format description; |
| c=network type address type connection address; |
| a=X X X; |
| m=video port number 1b/quantity of ports transmission protocol media format description; |
| c=network type address type connection address; |
| a=X X X; |
| m=application port number 1d/quantity of ports transmission protocol media format description; |
| c=network type address type connection address; |
| a=DC APP ID=X X X |
| ... |

For explanations of related parameters in Table 3, refer to Table 1. For example, "m=application port number 1d/a quantity of ports transmission protocol media format description; c=network type address type connection address; a=DC APP ID=X X X" indicates media negotiation information of the UE 1 for a data channel (specifically, an application data channel).

It may be understood that, in this embodiment of this application, a specific form in which the SIP re-invite request message (or the following SIP re-invite response message) carries an identifier of a DC application is not limited. In Table 3, an example in which the identifier of the DC application is located in "a row" is used. In another example, the identifier of the DC application may also be located in "m line."

S510: The first IMS AS sends a session event report message 3 to the first DC control network element.

For example, a session event reported by using the session event report message 3 may be a media change request event, and may be specifically an ADC establishment request event. For the DC control network element, establishment of the ADC indicates that the UE 1 and the UE 2 start to use the DC application. Correspondingly, removal of the ADC indicates that the UE 1 and the UE 2 end to use the DC application.

S511: After receiving the session event report message 3, the first DC control network element may return a session event report response message 3 to the first IMS AS.

S512: The first IMS AS forwards the SIP re-invite request message to the second IMS AS by using the second IMS communication control network element.

S513: After receiving the SIP re-invite request message, the second IMS AS sends a session event report message 4 to the second DC control network element.

For example, a session event reported by using the session event report message 4 may be a media change request event, and may be specifically an ADC establishment request event.

S514: After receiving the session event report message 4, the second DC control network element may return a session event report response message 4 to the second IMS AS.

S515: The second IMS AS forwards the SIP re-invite request message to the UE 2 by using the second IMS communication control network element.

S516: After the user of the UE 2 answers the call, the UE 2 may send an SIP re-invite response message to the second IMS communication control network element.

For example, an SIP header of the SIP re-invite response message may include a user identifier of the UE 1 and a user identifier of the UE 2; and an SIP body (namely, SDP information) of the SIP re-invite response message may include a media parameter accepted by the UE 2. Table 4 shows an example of a format of the SIP re-invite response message.

**Table 4: Example of the format of the SIP re-invite response message**

| |
|---|
| ... |
| From: X X X; |
| To: X X X; |
| ... |
| v=X X X; |
| s=X X X; |
| m=audio port number 2a/quantity of ports transmission protocol media format description; |
| c=network type address type connection address; |
| a=X X X; |
| m=video port number 2b/quantity of ports transmission protocol media format description; |
| c=network type address type connection address; |
| a=X X X; |
| m=application port number 2d/quantity of ports transmission protocol media format description; |
| c=network type address type connection address; |
| a=DC APP ID=X X X |
| ... |

For explanations of related parameters in Table 4, refer to Table 1. For example, "m=application port number 2d/a quantity of ports transmission protocol media format description; c=network type address type connection address; a=DC APP ID=X X X" indicates media negotiation information of the UE 2 for a data channel (specifically, an application data channel).

Subsequently, the SIP re-invite response message may be returned to the UE 1 through interaction between a network element in the first IMS network and a network element in the second IMS network, so that the UE 1 and the UE 2 establish an application data channel in a session corresponding to a call service. In this case, the session corresponding to the call service includes an audio channel, a video channel, and an application data channel. Further, the UE 1 and the UE 2 may transmit audio data through the audio channel, transmit video data through the video channel, and transmit media data of the DC application through the application data channel.

It may be understood that, if the UE 1 and the UE 2 belong to a same IMS network, interaction between a network element in the first IMS network and a network element in the second IMS network may not need to be performed.

The foregoing procedure describes the communication session between the UE 1 and the UE 2. To implement charging on the communication session between the two communication parties (for example, the UE 1 and the UE 2), a charging-related network element and architecture are currently introduced.

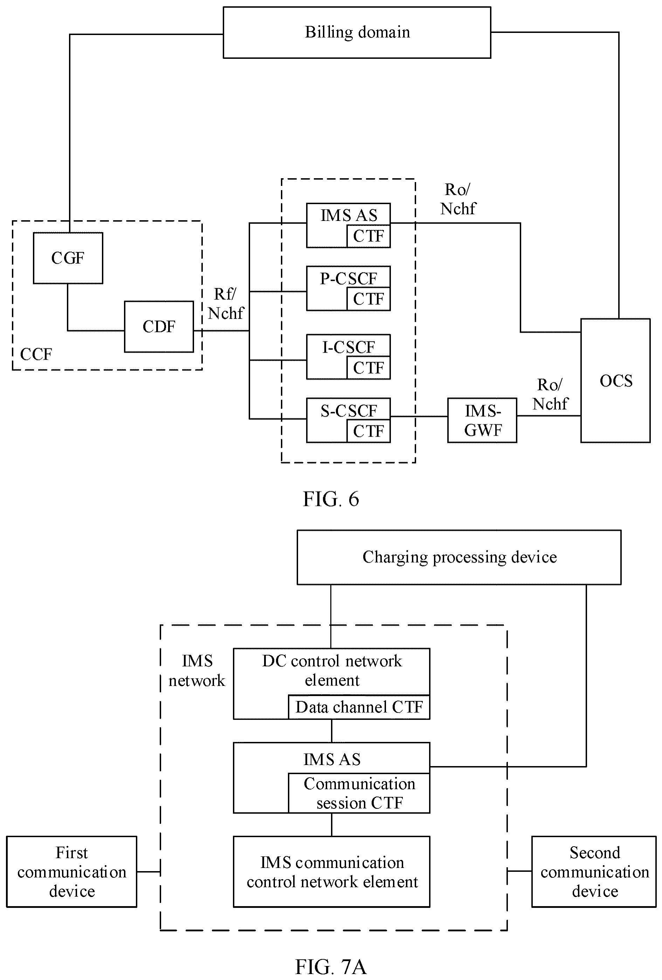

**FIG. 6** is a diagram of a charging architecture according to an embodiment of this application. As shown in FIG. 6, the charging architecture may include one or more IMS network elements, a charging processing device, and a billing domain (billing domain). The one or more IMS network elements may include an IMS AS, a P-CSCF network element, an I-CSCF network element, an S-CSCF network element, and the like. This is not specifically limited. The charging processing device may include a charging collection function (charging collection function, CCF) network element and an online charging system (online charging system, OCS). The charging collection function network element may be divided into a charging gateway function (charging gateway function, CGF) network element and a charging data function (charging data function, CDF) network element.

For example, each of the one or more IMS network elements may be associated with one charging trigger function (charging trigger function, CTF) unit. The IMS AS is used as an example. A CTF unit associated with the IMS AS is configured to trigger the charging processing device to provide a charging service for the CTF unit. The CTF unit associated with the IMS AS may be disposed in the IMS AS. For example, the IMS AS includes a module for implementing the CTF. Alternatively, the CTF unit associated with the IMS AS may be independent of the IMS AS. In this case, the CTF unit associated with the IMS AS may also be referred to as a CTF network element.

In the charging architecture shown in FIG. 6, CTF units associated with one or more IMS network elements may send charging information of a communication session to the charging processing device through an Rf or Ro interface, and then the CDF network element or the OCS may collect and sort out the charging information, and generate a service detail record for the communication session and sends the service detail record to the billing domain for account combination.

For example, the CTF unit associated with the IMS AS may send charging request information a to the charging processing device, where the charging request information a includes charging information 1 of a communication session and an IMS charging identifier (IMS charging identifier, ICID). A CTF unit associated with the P-CSCF network element may send charging request information b to the charging processing device, where the charging request information b includes charging information 2 of the communication session and an ICID. A CTF unit associated with the I-CSCF network element may send charging request information c to the charging processing device, where the charging request information c includes charging information 3 of the communication session and an ICID. A CTF unit associated with the S-CSCF network element may send charging request information d to the charging processing device, where the charging request information d includes charging information 4 of the communication session and an ICID. Correspondingly, after receiving the charging information sent by each IMS network element, the charging processing device may associate, based on the ICID, charging information sent by different IMS network elements (that is, associate the charging information 1, the charging information 2, the charging information 3, and the charging information 4 of the communication session). Then, a service detail record of the communication session is generated and sent to the billing domain for account combination.

The ICID may be allocated to the communication session by the CSCF network element (for example, the P-CSCF or the I-CSCF) that first receives the SIP invite request message of the communication session. The ICID may be used to identify a communication session, to implement charging for the communication session. For example, the ICID may be used to identify a charging periodicity (or a charging time period) of the communication session, and different charging periodicities of the communication session may correspond to different ICIDs. For example, different charging periodicities of the communication session may be obtained through division based on a rate, or may be obtained through division based on another possible event. This is not limited in this application.

In addition, in another possible example, a function of the charging processing device may alternatively be implemented by a charging function (charging function, CHF) network element. In this case, a service-oriented interface Nchf may be used to replace the Ro interface or the Rf interface.

It can be learned from FIG. 6 that, in a current charging architecture, the CTF unit associated with the IMS network element (for example, an IMS AS) may send the charging information of the communication session to the charging processing device, to charge the communication session. The CTF unit associated with the IMS network element may also be referred to as a CTF unit corresponding to the communication session.

After the DC application is introduced, the DC control network element delivers the DC application and controls a policy of the DC application. The IMS AS does not sense information about the DC application. Specifically, although SDP information in an SIP message received by the IMS AS carries an identifier of the DC application, the IMS AS does not understand a meaning represented by the identifier of the DC application, and does not know how to perform charging for the identifier of the DC application. Therefore, the charging information sent by the CTF unit associated with the IMS AS can only reflect that the user uses the DC in the communication session (for example, the charging information sent by the CTF unit associated with the IMS AS includes SDP information of the DC, and SDP information of the DC may reflect that the user uses the DC). However, the IMS AS is unaware of a charging mode (for example, a duration-based charging mode or a usage-times-based charging mode), a charging dimension (for example, time, traffic, or amount), and a charging quantity (for example, an amount of money that should be collected and an amount of traffic that should be allocated) of the DC application. Correspondingly, the charging processing device can perform, based on the charging information sent by the CTF unit associated with the IMS AS, charging only for use of the DC (for example, duration of using the DC) by the user in the communication session, but cannot perform charging for a specific DC application.

Considering that the DC control network element may sense charging modes, charging dimensions, charging quantities, and the like of different DC applications, to charge the DC applications, in a possible implementation, a CTF unit associated with the DC control network element sends charging information of the DC application to the charging processing device. The CTF unit associated with the DC control network element may also be referred to as a CTF unit corresponding to the DC application.

However, because the DC control network element communicates with another network element through a service-oriented interface, that is, the DC control network element does not receive the SIP message used to manage the communication session, when the CTF unit associated with the IMS AS triggers charging for the communication session, and the CTF unit associated with the DC control network element triggers charging of the DC application, the charging processing device may generate a call detail record of the communication session based on charging information sent by the CTF unit associated with the IMS AS, and generate a call detail record of the DC application based on charging information sent by the CTF unit associated with the DC control network element, but cannot perform associated charging on the communication session and the DC application.

For example, the user uses the DC application like intelligent translation in an audio call process. When the CTF unit associated with the IMS AS triggers charging, charging information sent by the CTF unit associated with the IMS AS is charging information of an audio call, and further, the charging processing device may generate a call detail record of the audio call based on the charging information of the audio call; and charging information sent by the CTF unit associated with the DC control network element is charging information of the intelligent translation, and further, the charging processing device may generate a call detail record of the intelligent translation based on the charging information of the intelligent translation. In other words, the charging processing device cannot combine the call detail record of the audio call and the call detail record of the intelligent translation into one call detail record. Consequently, a bill subsequently provided for the user cannot show that the user uses the intelligent translation in the audio call, and user experience is poor.

Based on this, an embodiment of this application provides an information transfer method, to perform associated charging on a communication session and a DC application associated with the communication session.

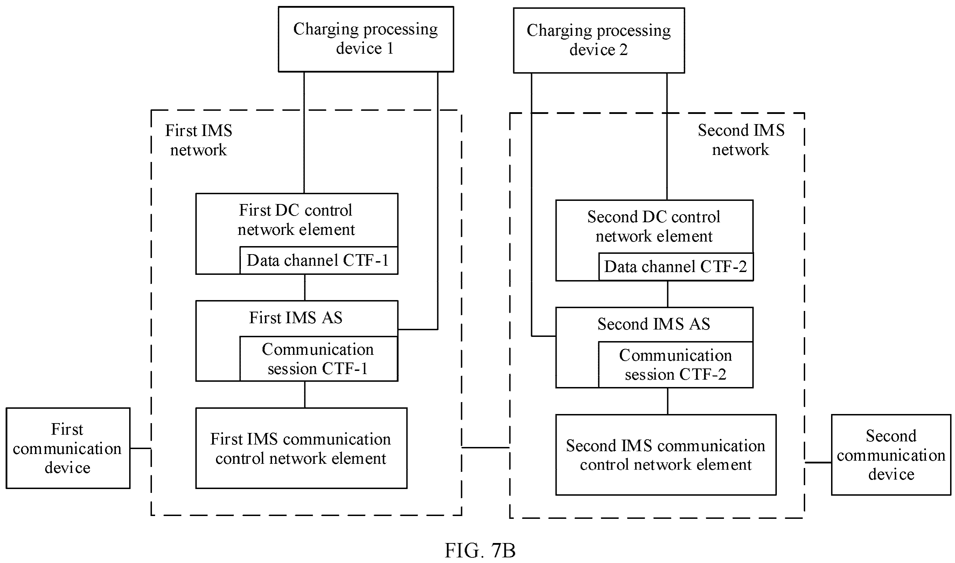

The following uses network architectures shown in FIG. 7A and FIG. 7B as an example to describe in detail a network architecture applicable to embodiments of this application. As shown in FIG. 7A, the network architecture may include a first CTF unit and a second CTF unit. The first CTF unit may be a CTF unit corresponding to a communication session (which may be referred to as a communication session CTF for short). The second CTF unit may be a CTF unit corresponding to a DC application (which may be referred to as a data channel CTF for short). For example, the first CTF unit may be associated with an IMS AS, and the second CTF unit may be associated with the DC control network element. In other words, the first CTF unit may be disposed in the IMS AS, or may be independent of the IMS AS. Similarly, the second CTF unit may be disposed in the DC control network element, or may be independent of the DC control network element.

Optionally, the network architecture further includes an IMS communication control network element, a charging processing device, and a plurality of communication devices (for example, a first communication device and a second communication device). The communication device may be the terminal device described above. For the IMS AS, the DC control network element, the IMS communication control network element, and the charging processing device, refer to the foregoing descriptions.

In FIG. 7A, an example in which the first communication device and the second communication device belong to a same IMS network is used for illustration. In FIG. 7B, an example in which the first communication device and the second communication device belong to different IMS networks is used for illustration. In FIG. 7B, a data channel CTF-1 and a communication session CTF-1 may send charging request information to a charging processing device 1, and a data channel CTF-2 and a communication session CTF-2 may send charging request information to a charging processing device 2.

Based on the network architecture shown in FIG. 7A or FIG. 7B, the following describes, with reference to specific embodiments, the information transfer method provided in embodiments of this application. The IMS communication control network element, the IMS AS, and the DC control network element in the following embodiments may be the IMS communication control network element, the IMS AS, and the DC control network element in FIG. 7A. In this case, the first CTF unit in the following embodiment is the data channel CTF associated with the DC control network element in FIG. 7A, and the second CTF unit is the communication session CTF associated with the IMS AS in FIG. 7A. Alternatively, the IMS communication control network element, the IMS AS, and the DC control network element in the following embodiments may be the first IMS communication control network element, the first IMS AS, and the first DC control network element in FIG. 7B. In this case, the first CTF unit in the following embodiment is the data channel CTF-1 associated with the first DC control network element in FIG. 7B, the second CTF unit is the communication session CTF-1 associated with the first IMS AS in FIG. 7B, and the charging processing device in the following embodiment is the charging processing device 1 in FIG. 7B. Alternatively, the IMS communication control network element, the IMS AS, and the DC control network element in the following embodiments may be the second IMS communication control network element, the second IMS AS, and the second DC control network element in FIG. 7B. In this case, the first CTF unit in the following embodiment is the data channel CTF-2 associated with the second DC control network element in FIG. 7B, the second CTF unit is the communication session CTF-2 associated with the first IMS AS in FIG. 7B, and the charging processing device in the following embodiment is the charging processing device 2 in FIG. 7B.

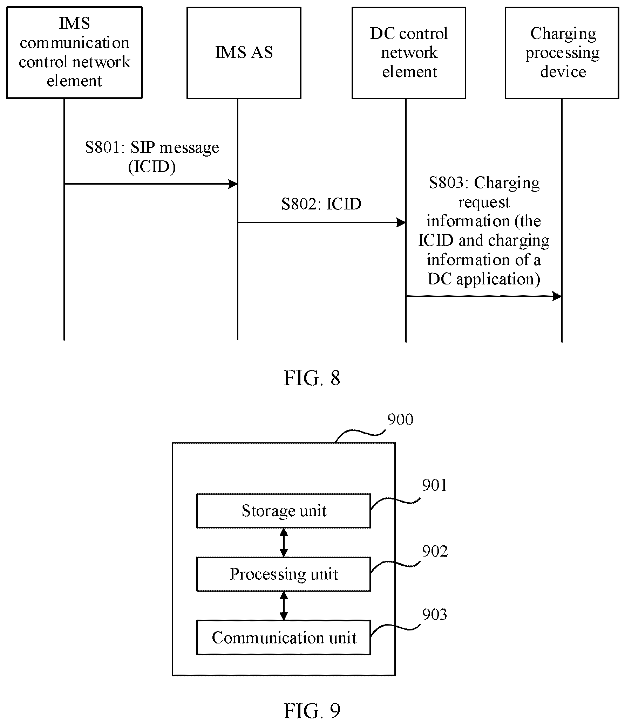

FIG. 8 is a schematic flowchart corresponding to an information transfer method according to an embodiment of this application. As shown in FIG. 8, the method includes the following steps.

S801: An IMS communication control network element sends an SIP message to an IMS AS, where the SIP message is used to manage a communication session between a first communication device and a second communication device, and the SIP message includes a charging identifier of the communication session. Correspondingly, the IMS AS receives the SIP message.

For example, the charging identifier of the communication session may be an ICID of the communication session, or may be another identifier used to charge the communication session. This is not specifically limited.

The SIP message may be a plurality of possible SIP messages. For example, the SIP message may be one or more of the following: an SIP invite request message, an SIP invite response message, an SIP re-invite request message, an SIP re-invite response message, an SIP update request message, an SIP update response message, an SIP bye (SIP BYE) message, an SIP notify (SIP NOTIFY) message, an SIP register (SIP REGISTER) message, an SIP subscribe (SIP SUBSCRIBE) message, an SIP publish (SIP PUBLISH) message, an SIP cancel (SIP CANCEL) message, and an SIP message (SIP MESSAGE).

As described above, the SIP message may include an SIP header and an SIP body. The SIP header may include the ICID of the communication session, and optionally, further include an inter operator identifier (inter operator identifier, IOI) and/or address information of the charging processing device. The IOI is used to identify an operator that initiates an SIP request, for example, an operator in which a requester that initiates a DC application is located. The operator may be an operator corresponding to the first communication device or the second communication device. For example, the SIP header includes a P-Charging-Vector header field and a P-Charging-Function-Addresses header field, the P-Charging-Vector header field carries the ICID and the IOI, and the P-Charging-Function-Addresses header field carries the address information of the charging processing device. Further, after receiving the SIP message, the IMS AS may obtain information such as the ICID of the communication session (and the IOI of the communication session and/or the address information of the charging processing device) from the SIP header.

S802: The IMS AS sends the ICID of the communication session to the DC control network element based on the SIP message.

For example, after receiving the SIP message, the IMS AS may send the ICID of the communication session to the DC control network element. Alternatively, after receiving the SIP message, the IMS AS may determine whether a preset condition is met. If the preset condition is met, the IMS AS may send the ICID of the communication session to the DC control network element. If the preset condition is not met, the IMS AS does not need to send the ICID of the communication session to the DC control network element.

The following describes the preset condition with reference to Implementation 1 and Implementation 2.

### (1) Implementation 1

In Implementation 1, that the preset condition is met may mean that a communication device subscribes to a data channel (that is, the communication device can transmit data of the DC application through the data channel). Specifically, after receiving the SIP message, the IMS AS may determine whether the communication device subscribes to the data channel. If the communication device subscribes to the data channel, the IMS AS may send the ICID of the communication session to the DC control network element.

It may be understood that the communication device herein may be a first communication device and/or a second communication device. For example, as shown in FIG. 7A, the first communication device and the second communication device belong to a same IMS network. After the IMS AS receives an SIP message from the first communication device or the second communication device, if the first communication device and/or the second communication device subscribe to a data channel, the IMS AS may send the ICID of the communication session to the DC control network element. For another example, as shown in FIG. 7B, the first communication device belongs to a first IMS network, and the second communication device belongs to a second IMS network. After the first IMS AS receives an SIP message from the first communication device or the second communication device, if the first communication device subscribes to the data channel, the first IMS AS may send the ICID of the communication session to the first DC control network element. Alternatively, after the second IMS AS receives an SIP message from the first communication device or the second communication device, if the second communication device subscribes to the data channel, the second IMS AS may send the ICID of the communication session to the second DC control network element.

For example, if the SIP message is the SIP invite request message shown in FIG. 5A, and the first communication device subscribes to the data channel, in S502, the first IMS AS may further send the ICID of the communication session to the first DC control network element. If the SIP message is the SIP re-invite request message shown in FIG. 5B, and the first communication device subscribes to the data channel, in S510, the first IMS AS may further send the ICID of the communication session to the first DC control network element.

### (2) Implementation 2

In Implementation 2, that the preset condition is met may mean that a communication device subscribes to a data channel, and a communication session is associated with the data channel. Specifically, after receiving an SIP message, the IMS AS may determine whether the communication device subscribes to the data channel. If the communication device subscribes to the data channel, the IMS AS may further determine whether the communication session is associated with the data channel. For example, the IMS AS may determine whether the SIP message includes indication information. The indication information may be, for example, SDP information of a DC. If the SIP message includes the indication information, the IMS AS may determine, based on the indication information, that the communication session is associated with the data channel, and further send the ICID of the communication session to the DC control network element.

For example, if the SIP message is the SIP invite request message shown in FIG. 5A, and the first communication device subscribes to the data channel, because the SIP invite request message includes the SDP information of the DC, in S502, the first IMS AS may further send the ICID of the communication session to the first DC control network element. If the SIP message is the SIP re-invite request message shown in FIG. 5B, and the first communication device subscribes to the data channel, because the SIP re-invite request message includes the SDP information of the DC, in S510, the first IMS AS may further send the ICID to the first DC control network element.

It may be understood that, in this embodiment of this application, "the data channel associated with the communication session" is a data channel established in the communication session.

In addition, optionally, the IMS AS may further send other possible information to the DC control network element, for example, one or more of the following.
(1) IOI: As described above, the IOI is used to identify an operator network in which a requester that initiates a DC application is located. Therefore, after receiving the IOI, the DC control network element may determine, through comparison, whether the operator network indicated by the IOI is a local network, that is, whether the DC application is initiated by a user of the local network, to determine whether to initiate a charging request. For example, if the DC application is initiated by the user of the local network, a charging request may be initiated. If the DC application is not initiated by the user of the local network, a charging request does not need to be initiated.
(2) Address information of the charging processing device: The DC control network element may send charging request information to the charging processing device based on the address information of the charging processing device. For example, the address information of the charging processing device may alternatively be preconfigured in the DC control network element. In this case, the IMS AS may not need to send the address information of the charging processing device to the DC control network element.
(3) ID of the DC application: The identifier of the DC application may be used by the DC control network element to identify the DC application that is being used, so that the DC control network element initiates a charging request for the DC application that is being used. For example, the user triggers a BDC establishment process for a DC application 1 and a DC application 2, but actually, the user uses only the DC application 1, but does not use the DC application 2. The DC control network element senses the BDC establishment process, but may not sense an ADC establishment process. As a result, the DC control network element may not learn of a DC application that is actually used by the user. Therefore, the IMS AS may send the identifier of the DC application that is being used to the DC control network element, so that the first CTF unit associated with the DC control network element can pertinently initiate a charging request for the DC application that is being used.
(4) User identifier of the first communication device and a user identifier of the second communication device: After the IMS AS sends the user identifier of the first communication device and the user identifier of the second communication device to the DC control network element, when the first CTF unit associated with the DC control network element sends charging request information, the charging request information may carry the user identifier of the first communication device and the user identifier of the second communication device, so that the charging processing device charges a corresponding user.

In this embodiment of this application, the IMS AS sends the ICID (and the IOI, the address information of the charging processing device, the identifier of the DC application, the user identifier of the first communication device, and the user identifier of the second communication device, where the ICID is used as an example herein) to the DC control network element in a plurality of manners. For example, after receiving the SIP message, the IMS AS may send a first session event report message to the DC control network element based on the SIP message, where the first session event report message may include the ICID. In addition, the first session event report message may further include other possible information, for example, an identifier of a session event.

For example, "the IMS AS sends a session event report message to the DC control network element" may be consistent with "the IMS AS sends an ICID to the DC control network element." For example, each session event report message sent by the IMS AS to the DC control network element includes the ICID. Alternatively, "the IMS AS sends a session event report message to the DC control network element" and "the IMS AS sends an ICID to the DC control network element" may be decoupled. For example, the session event report message sent by the IMS AS to the DC control network element may include the ICID, or may not be include the ICID.

S803: The DC control network element sends, to the charging processing device by using the first CTF unit associated with the DC control network element, the charging request information including the ICID of the communication session, where the ICID is used to perform associated charging on first charging information and second charging information.

For example, "the DC control network element sends the charging request information to the charging processing device by using the first CTF unit associated with the DC control network element" may be replaced with "the first CTF unit (which may be deployed in the DC control network element, or may be deployed independently of the DC control network element) associated with the DC control network element sends the charging request information to the charging processing device. For similarities, refer to the foregoing.

The first charging information is charging information of the DC application, and is provided by a first charging trigger function unit. The second charging information is charging information of the communication session, and is provided by a second CTF unit associated with the IMS communication control network element and/or the IMS application server. For example, the charging request information 1 sent by the first CTF unit to the charging processing device may include the ICID of the communication session and the charging information of the DC application, and the charging request information 2 sent by the second CTF unit to the charging processing device may include the ICID of the communication session and the charging information of the communication session. Further, after receiving the charging request information 1 and the charging request information 2, the charging processing device may perform associated charging on the charging information of the DC application and the charging information of the communication session based on the ICID of the communication session, for example, the charging processing device may combine the ICID in the charging request information 1 and the ICID in the charging request information 2 to generate one call detail record.

Optionally, the charging request information sent by the DC control network element to the charging processing device by using the first CTF unit may further include other possible information, for example, one or more of the following: an IOI, an identifier of the DC application, a user identifier of the first communication device, and a user identifier of the second communication device.

For example, after receiving information such as the ICID sent by the IMS AS, the DC control network element may first cache the information, and send charging request information to the charging processing device by using the first CTF unit after a trigger condition is met. That the trigger condition is met may include one or more of the following (1) to (4).
(1) The DC control network element receives a second session event report message from the IMS AS, where the second session event report message is used to report a media change request event, for example, may be an ADC establishment request event.
(2) The DC control network element receives a third session event report message from the IMS AS, where the third session event report message is used to report a media change request event, for example, may be an ADC teardown request event.
(3) The DC control network element receives a charging request from the first communication device or the second communication device. The charging request may be, for example, a request for applying for using a value-added service or applying for payment. The request may be directly sent to the DC control network element through a BDC (the request may be in an HTTP format), or may be sent to the IMS AS by using an SIP message, and then the IMS AS reports the request to the DC control network element, to trigger the DC control network element to perform charging.
(4) The DC control network element receives a fourth session event report message from the IMS AS, where the fourth session event report message is used to report and trigger a supplementary service. For example, the supplementary service may be an IMS multimedia telephony supplementary service. Triggering of the supplementary service affects charging of the DC application. For example, if a charging mode of the DC application is duration-based charging, when call waiting is triggered during a call, the DC control network element may determine, based on the call waiting, whether to continue charging, suspend charging, or forward the call (call forwarding may cause a change of a charging entity).

It may be understood that the second session event report message, the third session event report message, or the fourth session event report message and the first session event report message may be a same session event report message, or may be different session event report messages.

The foregoing mainly describes the solutions provided in embodiments of this application from a perspective of network element interaction. It may be understood that, to implement the foregoing functions, each network element may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the IMS AS and the DC control network element based on the foregoing method examples. For example, each functional unit may be obtained through division corresponding to each function, or two or more functions may be integrated into one unit. The integrated unit may be implemented in a form of hardware, or may be implemented in a form of a software functional unit.

When the integrated unit is used, FIG. 9 is a possible example block diagram of an apparatus according to an embodiment of this application. As shown in FIG. 9, an apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.
(1) The apparatus 900 may be the IMS application server in the foregoing embodiments, or may be a component (for example, a circuit or a chip) disposed in the IMS application server. The processing unit 902 may support the apparatus 900 in performing actions of the IMS application server in the foregoing method examples. Alternatively, the processing unit 902 mainly performs an internal action of the IMS application server in the method example, and the communication unit 903 may support communication between the apparatus 900 and another device.

For example, in an embodiment, the communication unit 903 is configured to: receive a session initiation protocol SIP message from an IMS communication control network element, where the SIP message is used to manage a communication session between a first communication device and a second communication device, and the SIP message includes a charging identifier of the communication session; and send the charging identifier to a data channel control network element, where the charging identifier is used to associate first charging information with second charging information; the first charging information is charging information of a data channel application and is provided by a first charging trigger function unit associated with the data channel control network element; the second charging information is charging information of the communication session, and is provided by a second charging trigger function unit associated with the IMS communication control network element and/or the IMS application server; and the data channel application is an application that provides a service through a data channel associated with the communication session.

In a possible design, the SIP message includes one or more of the following: an SIP invite request message, an SIP invite response message, an SIP re-invite request message, an SIP re-invite response message, an SIP update request message, an SIP update response message, an SIP bye message, an SIP notify message, an SIP register message, an SIP subscribe message, an SIP publish message, and an SIP cancel message.

In a possible design, the processing unit 902 is further configured to determine that the communication session is associated with a data channel.

In a possible design, the SIP message includes indication information, and the indication information indicates that the communication session is associated with the data channel.

In a possible design, the indication information includes session description protocol SDP information of the data channel.

In a possible design, the communication unit 903 is further configured to send one or more of the following to the data channel control network element: an inter operator identifier of the communication session, address information of the charging processing device, and an identifier of the data channel application.

In a possible design, the communication unit 903 is further configured to send a first session event report message to the data channel control network element, where the first session event report message includes the charging identifier.

In a possible design, the charging identifier is an IMS charging identifier.

In a possible design, the IMS communication control network element is a serving-call session control function network element.

(2) The apparatus 900 may be the data channel control network element in the foregoing embodiments, or may be a component (for example, a circuit or a chip) disposed in the data channel control network element. The processing unit 902 may support the apparatus 900 in performing actions of the data channel control network element in the foregoing method examples. Alternatively, the processing unit 902 mainly performs an internal action of the data channel control network element in the method examples, and the communication unit 903 may support communication between the apparatus 900 and another device.

For example, in an embodiment, the communication unit 903 is configured to: receive a charging identifier of a communication session between the first communication device and the second communication device from an IMS application server; and send, by using a first charging trigger function unit associated with the data path control network element, charging request information including the charging identifier to a charging processing device, where the charging identifier is used to associate first charging information with second charging information; the first charging information is charging information of a data channel application and is provided by the first charging trigger function unit; the second charging information is charging information of the communication session and is provided by a second charging trigger function unit associated with the IMS communication control network element and/or the IMS application server; and the data channel application is an application that provides a service through a data channel associated with the communication session.

In a possible design, the communication unit 903 is further configured to receive one or more of the following from the IMS application server: an inter operator identifier of the communication session, address information of the charging processing device, and an identifier of the data channel application.

In a possible design, the charging request information further includes the inter operator identifier of the communication session and/or the identifier of the data channel application.

In a possible design, the communication unit 903 is further configured to receive a first session event report message from the IMS application server, where the first session event report message is used to report an event of the communication session, and the first session event report message includes the charging identifier.

In a possible design, the communication unit 903 is further configured to: receive a second session event report message from the IMS application server, where the second session event report message is used to report an application data channel establishment request event of the data channel application; or receive a third session event report message from the IMS application server, where the third session event report message is used to report an application data channel teardown request event of the data channel application; or receive a charging request from the first communication device or the second communication device; or receive a fourth session event report message from the IMS application server, where the fourth session event report message is used to report that the first communication device or the second communication device triggers a supplementary service.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, the operations of the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing methods, for example, one or more application-specific integrated circuits (application specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

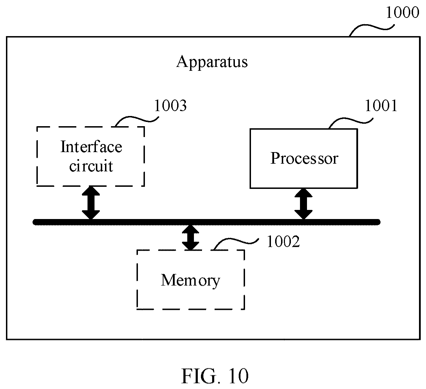

FIG. 10 is a diagram of a structure of an apparatus according to an embodiment of this application. The apparatus 1000 may be the IMS AS or the DC control network element in the foregoing embodiments, and is configured to implement a function of the IMS AS or the DC control network element in the foregoing embodiments.

As shown in FIG. 10, the apparatus 1000 may include a processor 1001, a memory 1002, and an interface circuit 1003. The processor 1001 may be configured to: process a communication protocol and communication data, and control the apparatus 1000. The memory 1002 may be configured to store a program and data, and the processor 1001 may perform, based on the program, the method performed by the apparatus 1000 in embodiments of this application. The interface circuit 1003 may be used by the apparatus 1000 to communicate with another device. The communication may be wired communication or wireless communication. The interface circuit may be, for example, a service-oriented interface.

Alternatively, the memory 1002 may be externally connected to the apparatus 1000. In this case, the apparatus 1000 may include the interface circuit 1003 and the processor 1001. Alternatively, the interface circuit 1003 may be externally connected to the apparatus 1000. In this case, the apparatus 1000 may include the memory 1002 and the processor 1001. When both the interface circuit 1003 and the memory 1002 are externally connected to the apparatus 1000, the apparatus 1000 may include the processor 1001.

The apparatus 1000 shown in FIG. 10 can implement processes related to the apparatus 1000 in the foregoing method embodiments. Operations and/or functions of modules in the apparatus 1000 shown in FIG. 10 are separately used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as methods, systems, or computer program products. Therefore, this application may be in a form of a hardware-only embodiment, a software-only embodiment, or an embodiment combining software and hardware aspects. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the spirit and scope of this application. This application is intended to cover these modifications and variations of this application provided that they fall within the scope of protection defined by the following claims and their equivalent technologies.

## Claims

1. An information transfer method, comprising:
receiving, by an internet protocol multimedia subsystem IMS application server, a session initiation protocol SIP message from an IMS communication control network element, wherein the SIP message is used to manage a communication session between a first communication device and a second communication device, and the SIP message comprises a charging identifier of the communication session; and
sending, by the IMS application server, the charging identifier to a data channel control network element, wherein the charging identifier is used to associate first charging information with second charging information, wherein
the first charging information is charging information of a data channel application, and is provided by a first charging trigger function unit associated with the data channel control network element;
the second charging information is charging information of the communication session, and is provided by a second charging trigger function unit associated with the IMS communication control network element and/or the IMS application server; and
the data channel application is an application that is managed by the data channel control network element and that provides a service through a data channel that is associated with the communication session.

2. The method according to claim 1, wherein the method further comprises:
sending, by the IMS application server, one or more of the following to the data channel control network element:
an operator identifier corresponding to the first communication device or the second communication device;
address information of a charging processing device; and
an identifier of the data channel application.

3. The method according to claim 1 or 2, wherein sending, by the IMS application server, the charging identifier to the data channel control network element comprises:
sending, by the IMS application server, a first session event report message to the data channel control network element, wherein the first session event report message comprises the charging identifier.

4. The method according to any one of claims 1 to 3, wherein the charging identifier is an IMS charging identifier ICID.

5. The method according to any one of claims 1 to 4, wherein the SIP message is one or more of the following:
an SIP invite request message, an SIP invite response message, an SIP re-invite request message, an SIP re-invite response message, an SIP update request message, an SIP update response message, an SIP bye message, an SIP notify message, an SIP register message, an SIP subscribe message, an SIP publish message, and an SIP cancel message.

6. The method according to any one of claims 1 to 5, wherein the method further comprises:
determining, by the IMS application server, that the communication session is associated with the data channel.

7. The method according to any one of claims 1 to 6, wherein the SIP message comprises indication information, and the indication information indicates that the communication session is associated with the data channel.

8. The method according to claim 7, wherein the indication information comprises session description protocol SDP information of the data channel.

9. The method according to any one of claims 1 to 8, wherein the IMS communication control network element is a serving-call session control function S-CSCF network element.

10. An information transfer method, wherein the method comprises:
receiving, by a data channel control network element from an internet protocol multimedia subsystem IMS application server, a charging identifier of a communication session between a first communication device and a second communication device; and
sending, by the data channel control network element, charging request information comprising the charging identifier to a charging processing device by using a first charging trigger function unit associated with the data channel control network element, wherein the charging identifier is used to associate first charging information with second charging information, wherein
the first charging information is charging information of a data channel application, and is provided by the first charging trigger function unit;
the second charging information is charging information of the communication session, and is provided by a second charging trigger function unit associated with the IMS communication control network element and/or the IMS application server; and
the data channel application is an application that is managed by the data channel control network element and that provides a service through a data channel that is associated with the communication session.

11. The method according to claim 10, wherein the method further comprises:
receiving, by the data channel control network element, one or more of the following from the IMS application server:
an operator identifier corresponding to the first communication device or the second communication device;
address information of the charging processing device; and
an identifier of the data channel application.

12. The method according to claim 10 or 11, wherein the charging request information further comprises the operator identifier corresponding to the first communication device or the second communication device, and/or the identifier of the data channel application.

13. The method according to any one of claims 10 to 12, wherein receiving, by the data channel control network element, the charging identifier sent by the IMS application server comprises:
receiving, by the data channel control network element, a first session event report message from the IMS application server, wherein the first session event report message is used to report an event of the communication session, and the first session event report message comprises the charging identifier.

14. The method according to any one of claims 10 to 13, wherein the method further comprises:
receiving, by the data channel control network element, a second session event report message from the IMS application server, wherein the second session event report message is used to report an application data channel establishment request event of the data channel application; or
receiving, by the data channel control network element, a third session event report message from the IMS application server, wherein the third session event report message is used to report an application data channel teardown request event of the data channel application; or
receiving, by the data channel control network element, a charging request from the first communication device or the second communication device; or
receiving, by the data channel control network element, a fourth session event report message from the IMS application server, wherein the fourth session event report message is used to report that the first communication device or the second communication device triggers a supplementary service.

15. The method according to any one of claims 11 to 14, wherein the charging identifier is an IMS charging identifier ICID.

16. An information transfer method, wherein the method comprises:
sending, by an IMS communication control network element, an SIP message to an IMS application server, wherein the SIP message is used to manage a communication session between a first communication device and a second communication device, and the SIP message comprises a charging identifier of the communication session;
receiving, by the IMS application server, the SIP message, and sending the charging identifier to a data channel control network element; and
receiving, by the data channel control network element, the charging identifier, and sending the charging identifier to a charging processing device by using a first charging trigger function unit associated with the data channel control network element, wherein the charging identifier is used to associate first charging information with second charging information, wherein
the first charging information is charging information of a data channel application, and is provided by the first charging trigger function unit;
the second charging information is charging information of the communication session, and is provided by a second charging trigger function unit associated with the IMS communication control network element and/or the IMS application server; and
the data channel application is an application that is managed by the data channel control network element and that provides a service through a data channel that is associated with the communication session.

17. The method according to claim 16, wherein the method further comprises:
sending, by the IMS application server, one or more of the following to the data channel control network element:
an inter operator identifier of the communication session;
address information of the charging processing device; and
an identifier of the data channel application.

18. The method according to claim 16 or 17, wherein the method further comprises:
sending, by the data channel control network element, the inter operator identifier of the communication session and/or the identifier of the data channel application to the charging processing device by using the first charging trigger function unit.

19. An information transfer apparatus, comprising a processor, wherein the processor is coupled to a memory, and the memory stores a computer program; and the processor is configured to invoke the computer program in the memory, so that the information transfer apparatus performs the method according to any one of claims 1 to 9.

20. An information transfer apparatus, comprising a processor, wherein the processor is coupled to a memory, and the memory stores a computer program; and the processor is configured to invoke the computer program in the memory, so that the information transfer apparatus performs the method according to any one of claims 10 to 15.

21. An information transfer system, wherein the information transfer system comprises the apparatus according to claim 19 and the apparatus according to claim 20.

22. A computer-readable storage medium, wherein the storage medium stores a computer program or instructions, and when the computer program or instructions are executed by a computer, the method according to any one of claims 1 to 18 is implemented.

23. A computer program product, wherein when a computer reads and executes the computer program product, the computer is enabled to perform the method according to any one of claims 1 to 18.
